Europäisches Patentamt

European Patent Office

Office européen des brevets

(19)

(11) Numéro de publication: **0 023 444**
**B1**

(12) **FASCICULE DE BREVET EUROPEEN**

(45) Date de publication du fascicule du brevet: **17.11.82**

(21) Numéro de dépôt: **80401046.0**

(22) Date de dépôt: **11.07.80**

(51) Int. Cl.³: **C 02 F 9/00,** B 01 D 13/00, B 04 B 7/18

(54) **Purificateur d'eau portatif à usage domestique.**

(30) Priorité: **26.07.79 FR 7919308**

(43) Date de publication de la demande:
**04.02.81 Bulletin 81/5**

(45) Mention de la délivrance du brevet:
**17.11.82 Bulletin 82/46**

(84) Etats contractants désignés:
**AT BE CH DE GB IT LI LU NL SE**

(56) Documents cités:
**DE - A - 2 220 328**
**DE - A - 2 233 002**
**GB - A - 1 925**
**GB - A - 233 337**
**US - A - 1 725 618**

(73) Titulaire: **SEB S.A. Société Anonyme française
F-21260 Selongey (FR)**

(72) Inventeur: **Lafontaine, Pierre
Chemin du Roy
F-65000 Tarbes (FR)**

(74) Mandataire: **Bouju, André et al,
38 Avenue de la Grande Armée
F-75017 Paris (FR)**

Courier Press, Leamington Spa, England.

Purificateur d'eau portatif à usage domestique

La présente invention concerne un purificateur d'eau portatif, à usage domestique.

Le purificateur visé par l'invention est destiné à purifier l'eau courante domestique, en lui enlevant notamment son goût parfois désagréable, provenant de l'addition de chlorine (hypochlorite de sodium, ou eau de javel) ou de la décomposition de matières organiques diverses.

On connaît déjà des purificateurs d'eau portatifs de ce type.

Dans ces purificateurs d'eau connus, l'eau contenue dans un récipient de stockage est refoulée au travers d'un filtre à base de charbon actif, au moyen d'une pompe. L'eau filtrée s'écoule ensuite, dans un récipient de collecte d'eau.

Après filtration, le filtre de ces appareils reste imprégné d'eau. La présence d'eau dans le filtre crée un milieu favorable à la prolifération *in situ* de micro-organismes qui sont ensuite susceptibles de passer dans l'eau filtrée. Par ailleurs, ces appareils comportent en amont et en aval du filtre, un circuit d'eau qui est difficile à vidanger complètement, et par suite, susceptible de polluer l'eau introduite ultérieurement dans ces appareils.

Le but de la présente invention est de remédier aux inconvénients des appareils connus, en créant un purificateur d'eau de construction simple et assurant une filtration rapide et efficace de l'eau, notamment en enlevant de cette dernière les bactéries ou autres micro-organismes susceptibles d'affecter la qualité de l'eau de consommation.

L'objet de l'invention est donc un purificateur d'eau portatif, à usage domestique, comprenant une enceinte de filtration (7), des moyens pour alimenter cette enceinte en eau à filtrer et des moyens pour collecter l'eau filtrée, caractérisé en ce qu'il comprend un boîtier extérieur (4) renfermant une enceinte rotative (7) de filtration par centrifugation, entourée par un compartiment (25) destiné à recueillir l'eau filtrée et à laisser s'écouler l'eau filtrée et un organe moteur (10) d'entrainement en rotation de l'enceinte de filtration (7), ledit boîtier (4) portant à sa partie supérieure un récipient (6) amovible d'eau à purifier qui comporte des moyens (30, 31) pour faire passer l'eau dans l'enceinte de filtration lorsque celle-ci a atteint une vitesse de rotation determinée, la paroi latérale de l'enceinte de filtration (7) portant successivement de l'intérieur vers l'extérieur de ladite enceinte une couche (17b) destinée à retenir les produits chlorés et les substances organiques en décomposition et, adjacente à ladite couche (17b), une membrane (17c) dont la porosité est choisie pour retenir les bactéries et en ce que, sous le compartiment (25) de collecte de l'eau filtrée, est disposé un récipient amovible (2) de collecte de l'eau filtrée.

La filtration par centrifugation a déjà été utilisée dans l'industrie, pour débarrasser un liquide de particules solides en suspension, mais non pas pour purifier l'eau courante disponible au public.

Dans le purificateur d'eau conforme à l'invention, la filtration par centrifugation permet d'utiliser des filtres à pores de très faible dimension, de sorte qu'il est possible de débarrasser l'eau de micro-organismes tels que les bactéries. De plus, la filtration de l'eau par centrifugation nécessite des moyens d'entraînement en rotation de puissance très réduite, ce qui est avantageux pour d'un appareil à usage ménager.

Par ailleurs, après centrifugation et épuisement de l'eau à filtrer, le filtre est sensiblement sec. La prolifération des micro-organismes retenus pas le filtre ne se poursuit pratiquement plus au sein du filtre.

D'autres particularités et avantages de l'invention apparaîtront encore dans la description qui va suivre.

Aux dessins annexés donnés à titre d'examples non limitatifs:

— la figure 1 est une vue en coupe longitudinale du purificateur conforme à l'invention;

— la figure 2 est une vue en perspective de l'un des paniers de l'enceinte de centrifugation;

— la figure 3 est une vue en perspective de l'autre panier de cette enceinte;

— la figure 4 est une vue en coupe, à plus grande échelle, d'une partie de la paroi de filtration de l'enceinte;

— la figure 5 est une vue en coupe longitudinale de la partie supéreure du purificateur conforme à l'invention, ce dernier étant en cours de fonctionnement; et

— la figure 6 est une vue analogue à la figure 5, le récipient d'eau à filtrer étant en position "couvercle."

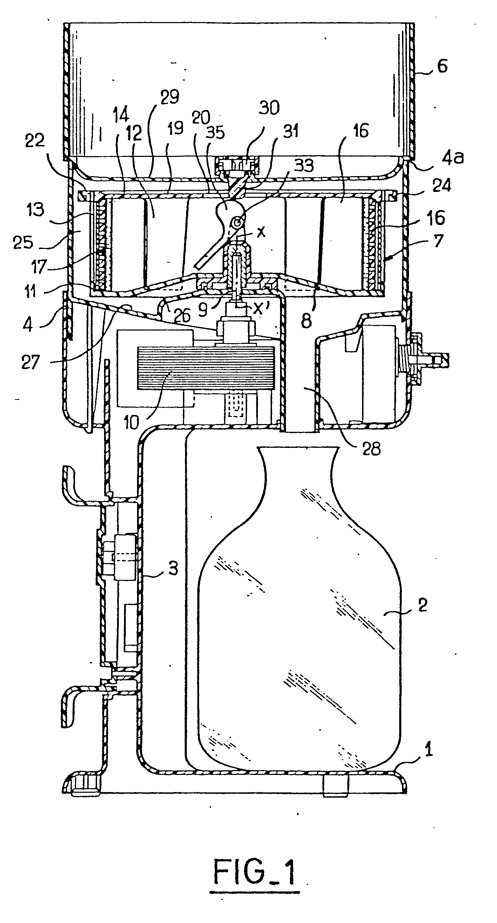

Dans la réalisation de la figure 1, le purificateur d'eau portatif à usage domestique comprend un socle 1 sur lequel est posée une carafe 2 destinée à contenir de l'eau purifiée. Ce socle 1 est surmonté par un pied 3 portant un boîtier 4.

Sur le boîtier 4 est posé un récipient ouvert 6 destiné à contenir l'eau à purifier.

Le boîtier 4 renferme à sa partie supérieure une enceinte de filtration 7, montée rotativement suivant son axe de révolution XX'. Le fond fermé 8 de cette enceinte est rendu solidaire de l'arbre de sortie 9 d'un moteur électrique 10 placé à la partie inférieure du boîtier 4.

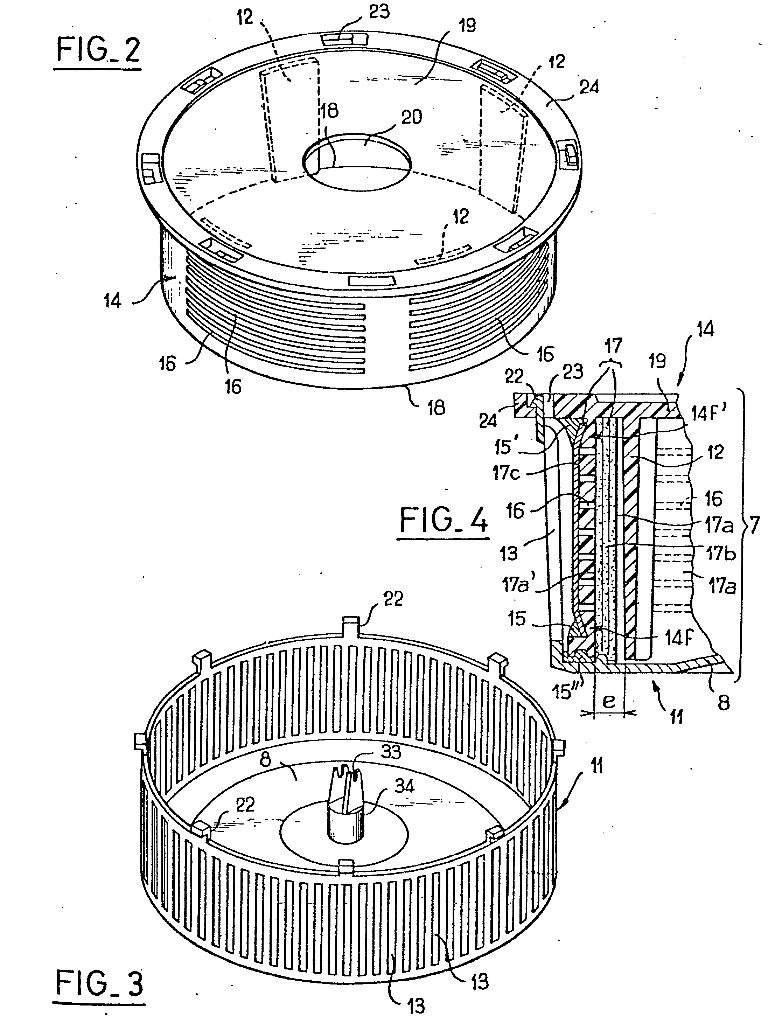

Dans l'exemple représenté, l'enceinte de filtration 7 comprend (voir figures 3 et 4) un premier panier cylindrique 11 dont la paroi latérale comporte des fentes verticales 13 régulièrement réparties autour de cette paroi.

Dans ce painier 11 est emboîte comme représenté sur la figure 1, un second panier 14 (voir figures 2 et 4) dont la paroi latérale comporte des fentes horizontales 16. Ce second panier comporte, à l'opposé de sa base ouverte 18, une paroi 19 présentant une ouverture centrale 20 pour l'admission de l'eau à filtrer contenue dans le récipient 6. Cette paroi 19 comporte en outre des, languettes 12 s'étendant parallèlement à la paroi latérale du panier 14 et formant entre elles et ladite paroi un certain espace e. Dans cet espace e est logé un élément filtrant comprenant de préférence trois feuilles de papier filtre 17b imprégnées de particules de carbon actif chargé de 1% en poids d'argent, insérées entre deux feuilles 17a, 17a' en fibres synthétiques non tissées, constituant un pré-filtre grossier.

Sur la face extérieure de la paroi du second panier est fixée une membrane filtrante composée d'une couche de copolymère d'acrynonitrile et de chlorure de polyvinyle 17c déposée sur un tissu en polyamide constituant un support mécanique à ladite couche 17c. L'ensemble des couches 17a, 17b et 17c constitue le filtre 17. La fixation est obtenue par une soudure à chaud du tissu de polyamide sur la matière constitutive du panier 14, dans les zones 14f et 14f'. Des cordons de colle 15 et 15' sont ensuite déposés sur ces zones de soudure. Les deux parois sont assemblées par emboîtement. Un cordon de colle 15'' est disposé entre le fond du premier panier 11 et le bord libre du second panier 14.

Par ailleurs, le bord supérieur du panier 11 comporte des becs de verrouillage 22 susceptibles d'être retenus par des ouvertures 23 ménagées dans une collerette 24 disposée sur le bord supérieur de la cartouche 14. Ces becs de verrouillage 22 et ces ouvertures 23 rendent le premier panier 11 mécaniquement solidaire du second panier 14, durant le temps de séchage du cordon de colle 15''.

Comme indiqué sur la figure 1, l'enceinte de filtration 7, composée par les deux paniers 11 et 14 assemblés, est entourée par un compartiment annulaire 25 délimité par la paroi latérale du boîtier 4, capable de recueillir l'eau filtrée au travers des couches de filtration 17a, 17b, 17c.

Le fond 26 de ce compartiment annulaire 25 comporte une rigole périphérique 27 permettant l'écoulement de l'eau filtrée vers un conduit vertical 28 d'évacuation de l'eau, qui débouche à l'extérieur du boîtier 4, au droit de la carafe 2 de collecte d'eau purifiée.

Le récipient 6 d'eau à filtrer repose sur le bord supérieur 4a de ce boîtier, le fond 29 du récipient 6 fermant ainsi la partie supérieure du compartiment 25 de collecte d'eau filtrée.

Le fond 29 du récipient 6 comporte un orifice central 30 d'écoulement d'eau placé en regard de l'ouverture 20 d'admission d'eau dans l'enceinte de filtration 7. Cet orifice 30 d'écoulement d'eau comporte un clapet 31 qui obture cet orifice 30 lorsque l'appareil est au repos, comme représenté sur la figure 1.

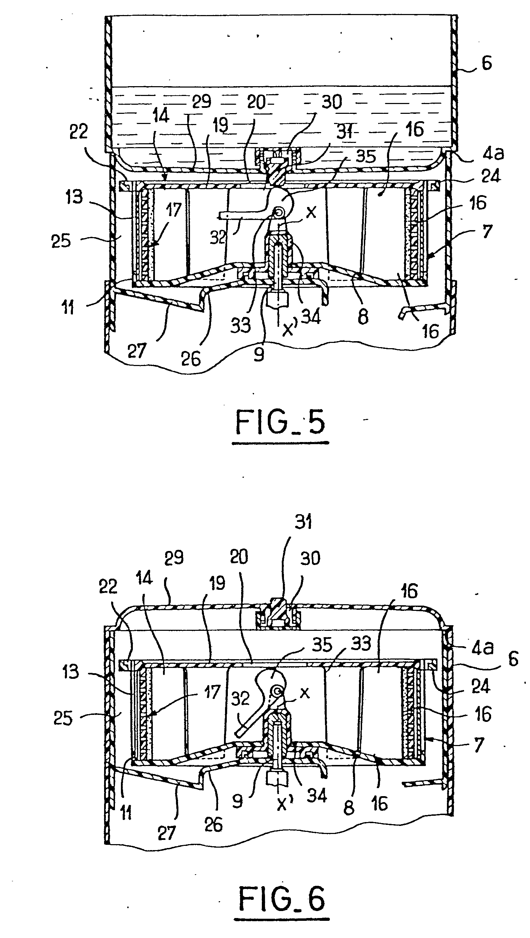

Ce clapet 31 est associé à des moyens permettant son ouverture automatique lorsque l'enceinte de filtration 7 est entraînée en rotation par le moteur 10. Ces moyens comprennent, à l'intérieur de l'enceinte de filtration, un bras 32 formant masselotte, articulé en 33, à l'une de ses extrémités sur une saillie axiale 34 du fond 8 du premier panier de filtration 11. L'extrémité libre du bras 32 est dirigée vers le fond 8 du panier 11, lorsque l'appareil est au repos, comme indiqué sur la figure 1. L'extrémité du bras 32 adjacente à la saillie 34 comporte une came 35 qui est susceptible de soulever le clapet 31 lorsque ce bras 32 est amené en position horizontale, sous l'effet de la force centrifuge résultant de la rotation du panier 11 (voir figure 5).

En position de rangement de l'appareil, le récipient vide 6 est retourné sur le boîtier 4, à la manière d'un couvercle, comme indiqué sur la figure 6.

On va maintenant détailler le fonctionnement du purificateur d'eau que l'on vient de décrire.

Lors de la première utilisation du purificateur d'eau on assujettit l'enceinte de filtration 7 sur l'arbre moteur 9.

On place sur le boîtier 4, le récipient 6 rempli d'eau à purifier. Dans cette position, le clapet 31 ferme l'orifice 30 d'écoulement d'eau du récipient 6, le bras 32 portant la came 35 étant dans la position représentée sur la figure 1.

Pour purifier l'eau contenue dans le récipient 6, il suffit de mettre en route le moteur électrique 10. L'enceinte de filtration 7 est entraînée en rotation à une vitesse comprise entre 2000 et 3000 tours par minute. Sous l'effet de la force centrifuge, le bras 32 est amené en position horizontale comme indiqué sur la figure 5, et la came 35 soulève le clapet 31.

L'eau est alors admise dans l'enceinte de filtration 7. Sous l'effet de la force centrifuge, l'eau est filtrée au travers du filtre 17 en traversant successivement les couches 17a, 17b, 17c.

La couche 17a constitue un pré-filtre pour retenir les grosses particules contenues dans l'eau alors que la seconde couche 17a' est destinée à retenir les particules de charbon actif pouvant se détacher des feuilles de papier 17b. Le charbon actif contenu dans ces feuilles de papier 17b enlève à l'eau son mauvais goût causé par les produits chlorés et les substances organiques en décomposition.

Pour une utilisation domestique courante, lorsque l'on utilise de l'eau délivrée par le réseau de distribution publique, la dimension moyenne des micro-pores que représente la couche 17c peut être de l'ordre de 0,45 micromètre.

Lorsque l'on désire utiliser directement l'eau des rivières ou des lacs, il est nécessaire d'utiliser des micro-porosités de l'ordre de 0,22 micromètre afin d'arrêter tous les micro-organismes pouvant se trouver dans ces eaux.

L'eau filtrée est collectée dans le compartiment annulaire 25 qui entoure l'enceinte de filtration 7, puis s'écoule dans la carafe 2, en passant par le conduit d'évacuation 28.

Lorsque la totalité de l'eau a été filtrée, le filtre 17 ne renferme pratiquement plus d'eau. Les bactéries ou les micro-organismes contenus dans la membrane filtrante 17c se trouvent ainsi dans un milieu pratiquement sec, peu favorable à leur prolifération.

**Revendications**

1. Purificateur d'eau portatif, à usage domestique, comprenant une enceinte de filtration (7), des moyens pour alimenter cette enceinte en eau à filtrer et des moyens pour collecter l'eau filtrée, caractérisé en ce qu'il comprend un boîtier extérieur (4) renfermant une enceinte rotative (7) de filtration par centrifugation entourée par un compartiment (25) destiné à recueillir l'eau filtrée, et à laisser s'écouler l'eau filtrée, et un organe moteur (10) d'entraînement en rotation de l'enceinte de filtration (7), ledit boîtier (4) portant à sa partie supérieure un récipient (6) amovible d'eau à purifier qui comporte des moyens (30, 31) pour faire passer l'eau dans l'enceinte de filtration lorsque celle-ci a atteint une vitesse de rotation determinée, la paroi latérale de l'enceinte de filtration (7) portant successivement de l'intérieur vers l'extérieur de ladite enceinte une couche (17b) destinée à retenir les produits chlorés et les substances organiques en décomposition et, adjacente à ladite couche (17b) une membrane (17c) dont la porosité est choisie pour retenir les bactéries et en ce que sous le compartiment (25) de collecte de l'eau filtrée est disposé un récipient amovible (2) de collecte de l'eau filtrée.

2. Purificateur conforme à la revendication 1, caractérisé en ce que la couche (17b) destinée à retenir les produits chlorés et les substances organiques en décomposition est constituée par du papier imprégné de charbon actif.

3. Purificateur conforme à la revendication 1, caractérisé en ce que la membrane (17c) destinée à retenir les bactéries présente des pores dont la dimension moyenne est de l'ordre de 0,45 micromètre.

4. Purificateur conforme à la revendication 1, caractérisé en ce que la membrane (17c) destinée à retenir les bactéries présente des pores dont la dimension moyenne est de l'ordre de 0,22 micromètre.

5. Purificateur conforme à l'une quelconque des revendications 3 ou 4, caractérisé en ce que la membrane (17c) destinée à retenir les bactéries est constituée par une couche de copolymère d'acrylonitrile et de chlorure de polyvinyle déposée sur un tissu de polyamide.

6. Purificateur conforme à l'une quelconque des revendications 1 à 5, caractérisé en ce que le récipient amovible d'eau à purifier (6) est placé sur le bord supérieur (4a) du boîtier (4), le fond (29) de ce récipient (6) fermant la partie supérieure du compartiment de filtration et de collecte d'eau filtrée (25).

7. Purificateur conforme à l'une quelconque des revendications 1 à 6, caractérisé en ce que le fond du récipient amovible d'eau à purifier (6) comporte un orifice d'écoulement d'eau (30) placé au droit d'une ouverture centrale (20) d'admission d'eau de l'enceinte de filtration (7), cet orifice (30) d'écoulement comportant un clapet (31) qui obture cet orifice (30) lorsque l'appareil est au repos, ce clapet étant associé à des moyens permettant l'ouverture de ce clapet lorsque l'enceinte de filtration est entraînée en rotation.

8. Purificateur conforme à la revendication 7, caractérisé en ce que les moyens précités comprennent, à l'intérieur de l'enceinte de filtration (7) un bras (32) articulé à l'une de ses extrémités sur une saillie axiale (34) du fond (8) de l'enceinte de filtration, l'extrémité libre dudit bras étant dirigée vers le fond de l'enceinte lorsque l'appareil est au repos, l'extrémité de ce bras adjacent à l'articulation comportant une came (35) susceptible de soulever le clapet (31) lorsque le bras (32) est amené en position horizontale sous l'effet de la force centrifuge résultant de la rotation de l'enceinte de filtation.

**Claims**

1. Portable water purifier, especially for domestic use, comprising a filtering vessel (7), means for feeding the water to be purified in the said vessel and means for collecting the purified water, characterized in that it comprises an external housing (4) enclosing a rotary centrifugal filtering vessel (7) surrounded by a compartment (25) designed to collect and to discharge the filtered water and a motor (10) driving in rotation the filtering vessel (7), the said housing (4) carrying at its upper part a removable container (6) for water to be purified, having means (30, 31) to transfer the water in the filtering vessel, when the latter has reached a given rotation speed, the lateral wall of the filtering vessel bearing successively from inward to outward a layer (17b) suitable for removing the chlorinated products and the organic substances in decomposition and, contiguous to it, a diaphragm (17c) whose porosity is selected to retain the bacteria, and in that a removable collecting container (2) for purified water is placed below the compartment (25) designed to collect the filtered water.

2. Purifier according to the claim 1, characterized in that the layer (17b) suitable for removing the chlorinated products and the organic substances in decomposition is constituted by paper impregnated with charcoal.

3. Purifier according to the claim 1, characterized in that the diaphragm (17c) suitable for removing the bacteria has pores whose average dimension is of the order of 0.45 micron.

durch den die Verschlußklappe (31) anhebbar

4. Purifier according to the claim 1, characterized in that the diaphragm (17c) suitable to remove the bacteria has pores whose average dimension is of the order of 0.22 micron.

5. Purifier according to any one of the claims 3 or 4, characterized in that the diaphragm (17c) suitable to remove the bacteria is constituted by a layer of acrylonitrile and polyvinyl chloride copolymer deposited on a polyamide cloth.

6. Purifier according to any one of the claims 1 to 5, characterized in that the removable container (6) for the water to be purified is placed on the upper edge (4a) of the housing (4), the bottom (29) of this container (6) closing the upper portion of the filtering and collection compartment (25) for the filtered water.

7. Purifier according to any one of the claims 1 to 6, wherein the bottom of the removable container (6) for the water to be purified includes a water flow orifice (30) placed in line with a central inlet opening (20) for water from the filtering vessel (7), said flow orifice (30) including a valve (31) which closes this orifice (30), when the purifier is inactive, this valve being associated with means enabling the opening of the valve when the basket is rotated.

8. Purifier according to the claim 7, wherein said means comprise, inside the filtering vessel (7), an arm (32) hinged at one end to an axial projection (34) of the bottom (8) of the filtering vessel, the free end of said arm being directed towards the bottom of the vessel when the purifier is inactive, the end of this arm adjacent to the hinge including a cam (35) which can lift the valve (31) when the arm (32) is brought into horizontal position under the effect of the centrifugal force resulting from the rotation of said basket.

**Patentansprüche**

1. Tragbarer Wasserreiniger für den häuslichen Gebrauch, mit einem Filtergehäuse (7), Mitteln zum Beschicken dieses Filtergehäuses mit zu filtrierendem Wasser und Mitteln zum Auffangen des filtrierten Wassers, dadurch gekennzeichnet, daß er ein Außengehäuse (4) aufweist, das ein drehbares Gehäuse (7) zum Filtrieren durch Zentrifugieren, welches von einem zum Auffangen und Abfließenlassen des filtrierten Wassers bestimmten Abteil (25) umgeben ist, und ein Antriebsorgan (10) zum Antreiben des Filtergehäuses (7) mit einer Drehbewegung enthält, wobei das genannte Außengehäuse (4) an seinem oberen Ende einen abnehmbaren Behälter (6) für das zu reinigende Wasser trägt, der Mittel (30, 31) aufweist, um das Wasser in das Filtergehäuse abzugeben, wenn letzteres eine bestimmte Drehgeschwindigkeit erreicht hat, und wobei die Seitenwand des Filtergehäuses (7) aufeinanderfolgend von innen nach außen in bezug auf letzteres eine zum Zurückhalten der chlorhaltigen Produkte und der in Fäulnis befindlichen organischen Substanzen bestimmte Schicht (17b) und, der genannten Schicht (17b) benachbart, eine Membran (17c) trägt, deren Porosität so gewählt ist, daß sie die Bakterien zurückhält, und daß unterhalb des Abteils (25) zum Auffangen des filtrierten Wassers ein entfernbarer Sammelbehälter (2) für das filtrierte Wasser angeordnet ist.

2. Reiniger nach Anspruch 1, dadurch gekennzeichnet, daß die zum Zurückhalten der chlorhaltigen Produkte und in Fäulnis befindlichen organischen Substanzen bestimmte Schicht (17b) aus mit Aktivkohle imprägniertem Papier gebildet ist.

3. Reiniger nach Anspruch 1, dadurch gekennzeichnet, daß die zum Zurückhalten der Bakterien bestimmte Membran (17c) Poren aufweist, deren Durchschnittsabmessung in der Größenordnung von 0,45 $\mu m$ liegt.

4. Reiniger nach Anspruch 1, dadurch gekennzeichnet, daß die zum Zurückhalten der Bakterien bestimmte Membran (17c) Poren aufweist, deren Durchschnittsabmessung in der Größenordnung von 0,22 $\mu m$ liegt.

5. Reiniger nach Anspruch 3 oder 4, dadurch gekennzeichnet, daß die zum Zurückhalten der Bakterien bestimmte Membran (17c) von einer auf einem Polyamidgewebe abgelagerten Schicht aus einem Copolymer von Acrylnitril und Polyvinlchlorid gebildet ist.

6. Reiniger nach einem der Ansprüche 1 bis 5, dadurch gekennzeichnet, daß der abnehmbare Behälter (6) für das zu reinigende Wasser auf dem oberen Rand (4a) des Gehäuses (4) angeordnet ist, wobei der Boden (29) des Behälters (6) den oberen Teil des Abteils (25) zum Filtern und Auffangen des filtrierten Wassers abschließt.

7. Reiniger nach einem der Ansprüche 1 bis 6, dadurch gekennzeichnet, daß der Boden des abnehmbaren Behälters (6) für das zu reinigende Wasser eine Wasserabflußöffnung (30) aufweist, die mit einer mittigen Wassereintrittsöffnung (20) des Filtergehäuses (7) fluchtend angeordnet ist, wobei die Abflußöffnung (30) eine Verschlußklappe (31) besitzt, die diese Öffnung (30) verschließt, wenn das Gerät außer Betrieb ist, und die Mitteln zugeordnet ist, die das Öffnen dieser Verschlußklappe zulassen, wenn das Filtergehäuse in Drehbewegung versetzt ist.

8. Reiniger nach Anspruch 7, dadurch gekennzeichnet, daß die vorstehend genannten Mittel im Inneren des Filtergehäuses (7) einen an einem seiner Enden an einem axialen Vorsprung (34) des Bodens (8) des Filtergehäuses angelenkten Arm (32) umfassen, dessen freies Ende gegen den Boden des Filtergehäuses gerichtet ist, wenn sich das Gerät außer Betrieb befindet, und dessen dem Anlenkpunkt benachbartes Ende einen Nocken (35) besitzt, ist, wenn der Arm (32) unter der Wirkung der aus der Drehung des Filtergehäuses resultierenden Zentrifugalkraft in Horizontallage geführt wird.

FIG_1

**0 023 444**

FIG_2

FIG_4

FIG_3

2

FIG_5

FIG_6